# FASCICULE DE BREVET EUROPEEN

(11) **EP 0 891 897 B1**
(45) Date de publication et mention de la délivrance du brevet: **07.05.2003**
(21) Numéro de dépôt: 98401710.3
(22) Date de dépôt: 06.07.1998
(51) Int. Cl.: B60R 16/02

(54) **Gaine de protection souple pour assurer le passage d'un faisceau électrique entre deux parties d'une installation telle qu'un véhicule automobile**
Flexible Schutzhülle zur Sicherung der Durchfuhr eines elektrischen Kabelbundes zwischen zwei Teilen einer Installation wie einem Kraftfahrzeug
Flexible protective sheath for ensuring the passage between two installation parts such as an automotive vehicle

(30) Priorité: 11.07.1997 FR 9708901
(43) Date de publication de la demande: 20.01.1999
(73) Titulaire: AUTOMOBILES PEUGEOT, 75116 Paris (FR); AUTOMOBILES CITROEN, 92200 Neuilly-sur-Seine (FR)
(72) Inventeur: Bloret, Jean-Pierre, 35700 Rennes (FR); Mougin, Frédéric, 25260 Colombier-Fontaine (FR)
(74) Mandataire: Bouget, Lucien

(56) Documents cités:
- DE-A- 4 243 557
- DE-A- 4 306 806
- DE-C- 3 500 359
- DE-C- 4 109 804
- DE-U- 8 207 358

## Description

L'invention concerne une gaine de protection souple en un matériau élastomère pour assurer le passage, entre deux parties d'une installation telle qu'un véhicule automobile, d'au moins un faisceau électrique selon le préambule de la revendication 1.

Pour assurer l'alimentation en courant électrique des équipements d'un véhicule automobile, il est nécessaire de faire passer des faisceaux électriques entre différents points du véhicule.

Dans certaines parties de leur parcours à l'intérieur du véhicule, les faisceaux électriques doivent être protégés par une gaine en élastomère, étanche et résistante à l'usure et/ou aux salissures. La gaine est fixée, à l'une de ses extrémités, sur une première partie de la carrosserie du véhicule et, à sa seconde extrémité, sur une seconde partie de la carrosserie. Les parties de la carrosserie du véhicule entre lesquelles sont fixées les gaines de passage des faisceaux électriques peuvent être des parties fixes telles que la caisse du véhicule ou des éléments mobiles tels que les portes, le volet arrière ou le coffre du véhicule.

Le diamètre intérieur des gaines de protection en élastomère d'un véhicule automobile est prévu pour permettre un passage avec un faible jeu d'un ou plusieurs faisceaux électriques ou conduits. Les faisceaux électriques de véhicule automobile comportent généralement à leurs extrémités des pièces de connexion en matériau plastique ou métallique dont les dimensions peuvent être largement supérieures au diamètre des conducteurs du faisceau. Les gaines de protection en élastomère comportent à leurs extrémités des embouts permettant leur fixation par clippage dans des ouvertures ménagées dans des parties de la carrosserie du véhicule.

Dans le cas où l'on désire assurer une connexion électrique au niveau d'un embout de la gaine de protection du faisceau, le connecteur doit être introduit dans l'embout, au moment de la mise en place du faisceau dans la gaine. Du fait de la valeur élevée du coefficient de frottement entre le caoutchouc de la gaine et de l'embout et la matière plastique constituant généralement le corps des connecteurs de faisceau électrique, et de la déformabilité réduite de l'embout, la mise en place des connecteurs dans les embouts des gaines de protection est une opération difficile.

En outre, l'embout de la gaine dans lequel est introduit le connecteur manque de rigidité, de sorte qu'il est susceptible de se déformer, au moment où l'on réalise la fixation de l'embout sur la carrosserie du véhicule automobile, de ce fait l'engagement et la fixation de l'embout dans l'ouverture de la carrosserie est une opération difficile.

Cette opération est d'autant plus difficile que le coefficient de frottement du caoutchouc sur les bords de l'ouverture de la carrosserie a une valeur élevée. Pendant l'opération de mise en place de l'embout dans l'ouverture de la carrosserie également, le manque de rigidité de l'embout absorbe une partie de l'effort mis en oeuvre pour son engagement et a pour effet de rendre le guidage et l'introduction de l'embout dans l'ouverture extrêmement délicats.

Pour améliorer les conditions d'engagement de l'embout d'une gaine de protection dans l'ouverture de la carrosserie, on a proposé, dans le document FR 2 730 785 A1 (préambule), de fixer, à la périphérie externe de l'embout, des éléments d'engagement favorisant le glissement de l'embout dans l'ouverture de la carrosserie. Ces éléments d'engagement peuvent être réalisés en une matière plastique d'une dureté sensiblement supérieure à la dureté de la matière élastomère de la gaine et présentant un coefficient de frottement relativement faible sur le métal de la carrosserie.

Cependant, une telle réalisation de l'embout d'une gaine en matériau élastomère ne permet pas de faciliter l'introduction et la fixation d'un connecteur de faisceau électrique à l'intérieur de l'embout. Le connecteur introduit à l'intérieur de l'embout de la gaine, qui est de type mâle ou femelle, doit être relié à un connecteur du type opposé accessible à l'intérieur de l'ouverture de la carrosserie dans laquelle on met en place et on fixe l'embout de la gaine.

Du fait que le connecteur disposé dans l'embout est maintenu par simple contact contre la surface intérieure de l'embout, l'immobilisation du connecteur dans l'embout n'est pas assurée de manière efficace, ce qui peut compliquer les opérations à réaliser au moment de la connexion des connecteurs mâle et femelle. En outre, lors de la mise en place de l'embout dans l'ouverture de la carrosserie, le connecteur qui n'est pas maintenu de manière ferme à l'intérieur de l'embout peut être déplacé. Dans certains cas, le maintien du ou des faisceaux à l'intérieur de la gaine peut être défectueux.

Le but de l'invention est donc de proposer une gaine de protection souple en un matériau élastomère pour assurer le passage, entre deux parties d'une installation telle qu'un véhicule automobile, d'au moins un faisceau électrique comportant un élément de raccordement à l'une au moins de ses extrémités, la gaine ayant au moins un embout pour sa fixation dans une ouverture d'une partie de l'installation, à l'une au moins de ses extrémités, dans lequel est engagé l'élément de raccordement du faisceau électrique, cette gaine de protection étant réalisée de manière telle que la fixation de l'embout dans l'ouverture soit facilitée et que le maintien de l'élément de raccordement du faisceau électrique dans l'embout soit assuré de manière efficace.

Dans ce but, la gaine de protection suivant l'invention comporte au moins un élément d'engagement favorisant le glissement et assurant la fixation de l'embout dans l'ouverture fixé à la périphérie externe de l'embout et comprenant, dans une disposition en saillie radiale vers l'intérieur, au moins un moyen de fixation amovible de l'élément de raccordement du faisceau électrique.

Afin de bien faire comprendre l'invention, on va maintenant décrire, à titre d'exemples, en se référant aux figures jointes en annexe, deux modes de réalisation d'une gaine de protection d'un faisceau électrique assurant le passage du faisceau entre une porte et la caisse d'un véhicule automobile.

La figure 1 est une vue en coupe axiale suivant 1-1 de la figure 2, d'une gaine suivant l'invention et suivant un premier mode de réalisation.

La figure 2 est une vue en coupe partielle et en élévation suivant 2-2 de la figure 1 de la gaine.

La figure 3 est une vue en coupe suivant 3-3 de la figure 1.

La figure 4 est une vue en perspective de l'élément d'engagement de la gaine représentée sur les figures 1 à 3.

La figure 5 est une vue en coupe suivant 5-5 de la figure 6 d'une gaine suivant l'invention et suivant un second mode de réalisation. La figure 6 est une vue en coupe suivant 6-6 de la figure 5.

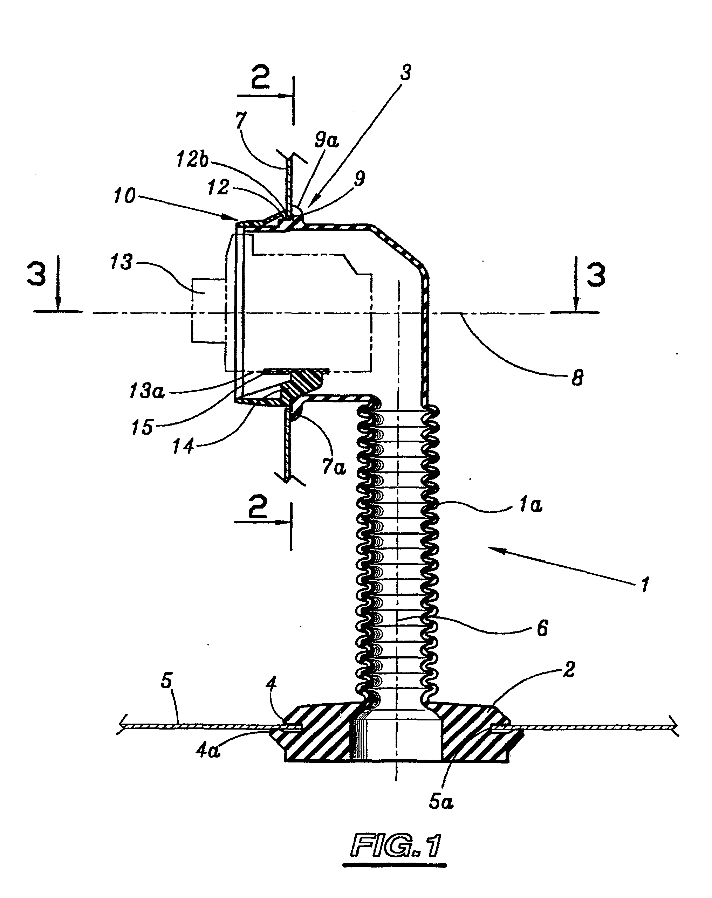

Sur les figures 1, 2 et 3, on a représenté une gaine désignée de manière générale par le repère 1 destinée à assurer la protection d'un faisceau électrique d'un véhicule automobile et le passage étanche du faisceau entre une porte et la caisse du véhicule.

La gaine 1 comporte un corps central tubulaire la réalisé sous forme ondulée ou annelée, de telle sorte que le corps la à l'intérieur duquel passe le faisceau électrique (non représenté), puisse se déformer, par flexion, par extension ou par compression entre deux parties d'un véhicule automobile telle qu'une porte du véhicule et une partie de la caisse du véhicule située à l'intérieur de l'habitacle.

La gaine 1 comporte, aux extrémités du corps central ondulé la, un premier embout 2 et un second embout 3 destinés à assurer la fixation des extrémités de la gaine sur la porte et sur la caisse du véhicule automobile, respectivement. Le premier embout 2, destiné à assurer la fixation d'une première extrémité de la gaine 1 à l'intérieur d'une ouverture traversant une tôle de la porte du véhicule automobile, est réalisé sous la forme d'un disque en matériau élastomère venu de matière avec le corps ondulé la de la gaine, lors de la réalisation de la gaine par moulage. L'embout 2 en forme de disque et le corps 1a de la gaine sont coaxiaux et de révolution autour d'un axe commun 6. L'embout 2 comporte une gorge 4 ayant pour axe l'axe 6 qui est délimitée extérieurement par une lèvre annulaire 4a destinée à venir s'appuyer contre une face de la tôle 5 de la porte de véhicule automobile autour de l'ouverture 5a de la tôle 5 dans laquelle on engage une partie de l'embout 2 pour réaliser la fixation d'une extrémité de la gaine 1 sur la tôle 5 de la porte. L'embout 2 est engagé à l'intérieur de l'ouverture 5a et mis en place par poussée dans la direction de l'axe 6, de telle sorte que le bord de l'ouverture 5a dont le diamètre est sensiblement égal au diamètre minimal interne de la gorge 4 vienne se loger dans une partie en retrait vers l'intérieur de la gorge 4. La lèvre 4a vient alors en appui contre la face de la tôle 5 opposée à la face d'engagement de l'embout, autour de l'ouverture 5a. On assure ainsi un maintien et une fixation étanche de l'embout 2 dans la tôle 5 de la porte du véhicule automobile.

L'embout 3, qui est disposé à l'extrémité du corps la opposée à l'embout 2, permet de réaliser la fixation de la seconde extrémité de la gaine 1 dans une ouverture 7a d'une tôle 7 de la caisse du véhicule automobile accessible à l'intérieur de l'habitacle du véhicule.

L'embout 3 comporte une partie tubulaire en matériau élastomère venu de matière avec le corps 1a et l'embout 2 de la gaine, lors du moulage de la gaine, ayant un axe 8 perpendiculaire à l'axe 6 du corps la et de l'embout 2 de la gaine. La partie tubulaire en matériau élastomère de l'embout 3 est reliée à l'extrémité du corps ondulé 1a de la gaine 1 par une partie coudée de la gaine 1 réalisée en une seule pièce avec le corps 1a, l'embout 2 et la partie tubulaire de l'embout 3, lors du moulage de la gaine 1.

La partie tubulaire en matériau élastomère de l'embout 3 comporte une gorge 9 ayant pour axe l'axe 8 et délimitée extérieurement par une lèvre 9a annulaire en saillie radiale vers l'extérieur de la partie tubulaire en matériau élastomère de l'embout 3.

Lors de l'engagement de l'embout 3 dans l'ouverture 7a de la tôle 7 de la caisse du véhicule automobile, le bord de l'ouverture 7a vient s'engager dans la gorge 9 et la lèvre annulaire 9a constitue une lèvre d'étanchéité venant en appui contre une surface de la tôle 7 autour de l'ouverture 7a.

Selon l'invention, l'embout 3 de la gaine 1 comporte de plus un élément d'engagement 10 en une matière plastique de forme générale annulaire.

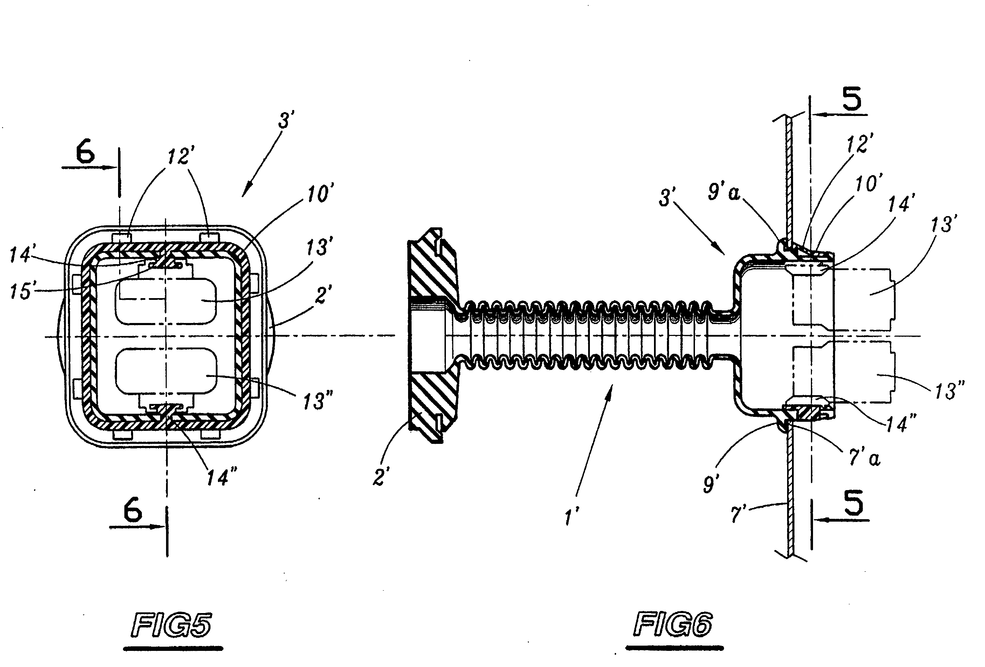

Sur la figure 4, on a représenté l'élément d'engagement 10 séparé de la partie tubulaire en matériau élastomère de l'embout. L'élément d'engagement 10 peut être réalisé de manière monobloc, par moulage, en une matière plastique telle qu'une polyamide.

L'élément d'engagement 10 comporte un corps annulaire 10a dont la surface interne est cylindrique et présente un diamètre sensiblement égal ou légèrement inférieur au diamètre du tronçon d'extrémité de la partie tubulaire en élastomère de l'embout 3 et une surface externe légèrement tronconique évasée dans le sens allant de l'avant vers l'arrière sur la figure 4.

Dans sa partie arrière, le corps 10a de l'élément d'engagement en matière plastique 10 comporte quatre encoches 11 dans chacune desquelles est placé un doigt 12 réalisé en une seule pièce avec le corps 10a de l'élément 10.

Chacun des doigts 12 présente une surface externe 12a inclinée vers l'extérieur et vers l'arrière par rapport à la surface externe tronconique du corps 10a de l'élément 10 ainsi qu'une partie d'extrémité arrière 12b comportant une encoche dirigée vers l'extérieur et un talon situé vers l'intérieur, c'est-à-dire du côté du doigt 12 opposé à la surface externe inclinée 12a. En outre, l'élément 10 comporte, en saillie radiale vers l'intérieur par rapport à la surface interne du corps 10a, un moyen 14 de fixation d'un connecteur 13 du faisceau électrique passant dans la gaine 1 représentée sur les figures 1, 2 et 3.

Le moyen de fixation 14, qui est réalisé de manière monobloc avec le corps 10a de l'élément 10, comporte une base 14a et une palette 15 de fixation du connecteur 13. La palette 15 comporte deux bords latéraux 15a, 15b d'épaisseur réduite destinés à venir s'engager dans des glissières de la surface d'appui 13a du connecteur 13, lors de la fixation du connecteur à l'intérieur de l'embout 3. De plus, la palette 15 de l'élément de fixation 14 comporte une partie d'extrémité 15c située vers l'avant de l'élément d'engagement 10 traversée par une ouverture 16. Le connecteur 13 comporte sur sa face d'appui 13a un ergot qui s'engage dans l'ouverture 16, à la fin du déplacement par glissement du connecteur 13 sur la palette 15, réalisant ainsi la fixation par clippage du connecteur 13 sur le moyen de fixation 14. Pour assurer la séparation du connecteur 13 et du moyen de fixation 14, il suffit d'introduire une lame telle qu'une lame de tournevis entre la partie 15c de la palette et la surface d'appui 13a du connecteur, pour faire sortir l'ergot de l'ouverture 16. On peut alors déplacer par glissement le connecteur 13 sur la palette 15 jusqu'à sa séparation de l'élément d'engagement 10.

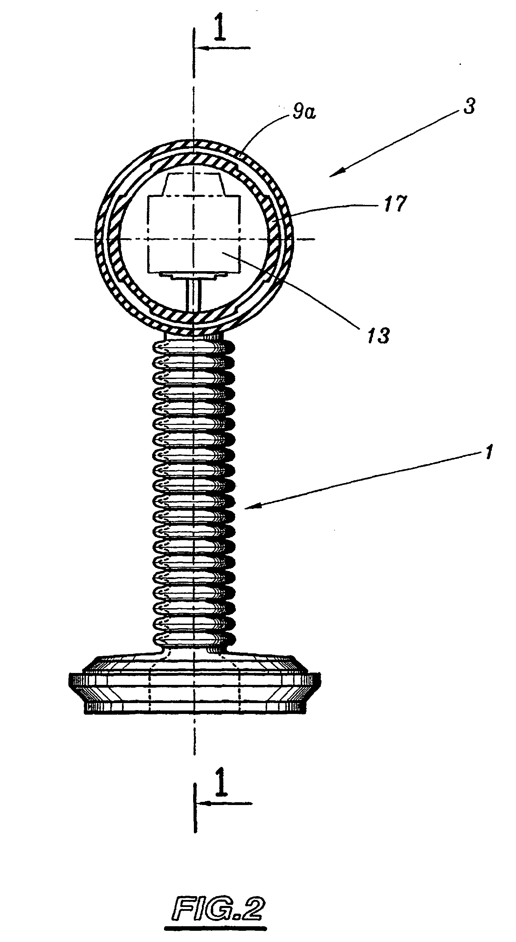

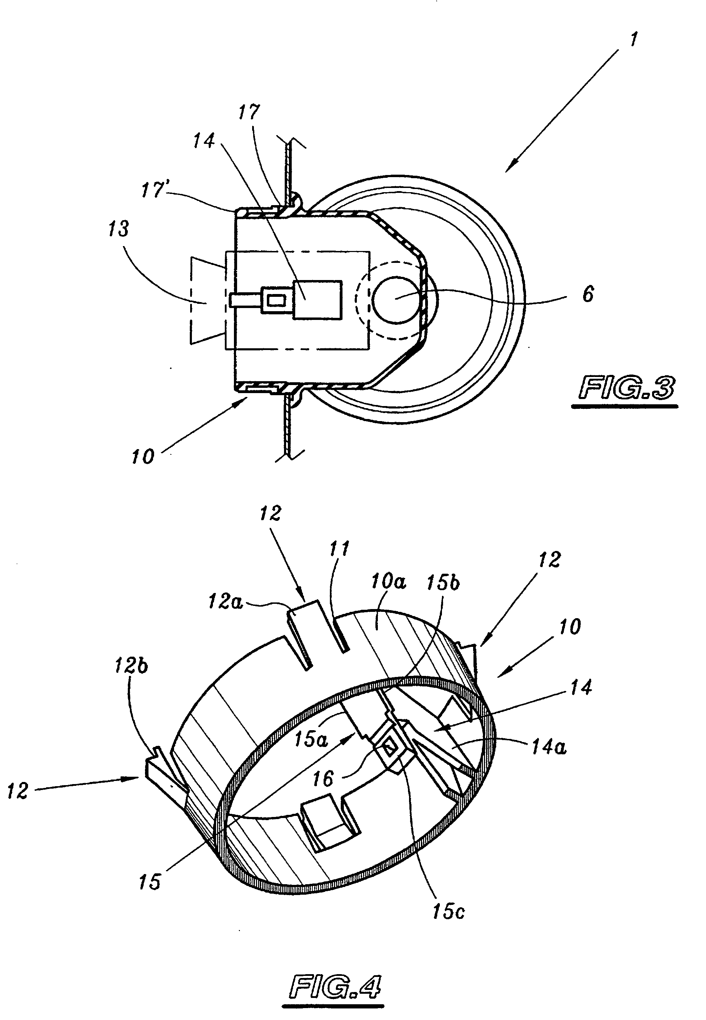

Comme il est visible sur la figure 1, l'élément d'engagement 10 de l'embout est monté sur le tronçon d'extrémité de la partie tubulaire en matériau élastomère de l'embout 3. L'élément 10 est engagé, par sa partie arrière sur le tronçon d'extrémité de l'embout 3, jusqu'au moment où le bord antérieur (sur la figure 4) du corps 10a de l'élément d'engagement 10 vient en butée sur un talon 17 (voir figures 2 et 3) de la partie tubulaire en matériau élastomère de l'embout 3. L'élément d'engagement est alors bloqué axialement entre les talons 17 et 17'. Les parties d'extrémité 12b des doigts 12 sont alors placées à l'intérieur de la gorge 9. La base 14a du moyen de fixation est engagée dans une fente de la partie tubulaire de l'embout 3.

Lors du montage de l'embout 3 à l'intérieur de l'ouverture 7a de la tôle 7, le bord de l'ouverture 7a vient en appui contre les parties d'extrémité 12b des doigts 12. La lèvre 9a de la partie tubulaire en matériau élastomère de l'embout 3 vient alors en appui contre la tôle 7 autour de l'ouverture 7a pour assurer l'étanchéité de la partie interne de la gaine 1.

Lorsque l'embout 3 est engagé dans l'ouverture 7a de la tôle 7, comme représenté sur la figure 1, les doigts 12 assurent le verrouillage de l'embout 3 sur la tôle 7 par serrage d'une partie de la tôle 7, à la périphérie de l'ouverture 7a, entre la lèvre annulaire 9a de l'embout 3 et les parties d'extrémité 12b des doigts 12.

Comme il a été expliqué plus haut, le connecteur 13 peut être facilement mis en place et fixé à l'intérieur de l'embout 3, par l'intermédiaire du moyen de fixation 14. Le connecteur 13 est alors maintenu dans une position parfaitement définie à l'intérieur de l'embout 3.

Il est possible de prévoir des éléments de positionnement, appelés détrompeurs, sur l'élément d'engagement 10, de manière à pouvoir assurer un positionnement défini en orientation du connecteur 13. Le connecteur 13 fixé à l'intérieur de l'embout 3 peut être facilement relié à un connecteur de type opposé (mâle ou femelle) accessible à l'intérieur de l'ouverture 7a.

On peut alors mettre en place l'embout 3 à l'intérieur de l'ouverture 7a en engageant la partie d'extrémité de l'élément d'engagement 10 dans l'ouverture 7a et en exerçant une poussée sur l'embout 3, dans la direction de l'axe 8. Le glissement de l'élément d'engagement 10 sur le bord de l'ouverture 7a est facilité par la présence de la surface externe tronconique du corps 10a de l'élément 10 et par le fait que l'élément 10 est réalisé en une matière polymère telle qu'une polyamide dont le coefficient de frottement sur le métal de la tôle 7 est relativement faible.

Pendant l'engagement de l'embout 3 dans l'ouverture 7a de la tôle 7, le connecteur 13 est parfaitement maintenu à l'intérieur de l'embout 3 du fait du clippage sur la plaquette 15 du moyen de fixation 14.

Le dispositif suivant l'invention permet donc d'assurer une fixation parfaite du connecteur et de faciliter la mise en place et la fixation de l'embout de la gaine.

Sur les figures 5 et 6, on a représenté une variante de réalisation d'une gaine suivant l'invention.

Les éléments correspondants sur les figures 1 à 4 d'une part et 5 et 6 d'autre part portent les mêmes repères avec cependant l'exposant ' (prime) pour les éléments du dispositif représenté sur les figures 5 et 6.

La gaine 1', selon le second mode de réalisation, comporte à l'une de ses extrémités un embout 2', identique à l'embout 2 de la gaine 1 selon le premier mode de réalisation, et, à sa seconde extrémité, un embout 3' comportant un élément d'engagement 10' comportant des moyens de fixation 14' et 14" pour assurer la fixation de deux connecteurs 13' et 13". La gaine 1' peut être utilisée pour assurer le passage de deux faisceaux électriques comportant chacun un connecteur 13' ou 13" engagé dans l'embout 3'.

De manière à pouvoir loger plus facilement les connecteurs 13' et 13", la partie d'extrémité de forme tubulaire en matériau élastomère de l'embout 3' venue de matière avec le corps de la gaine 1' ainsi que l'élément d'engagement 10' en matière plastique ont une section carrée à angles arrondis, comme il est visible sur la figure 6.

Sur chacun des côtés de la section carrée de l'élément d'engagement 10' en matière plastique sont prévus deux doigts 12' sensiblement analogues au doigt 12 de l'élément d'engagement de l'embout de la gaine selon le premier mode de réalisation.

Les moyens de fixation amovibles 14' et 14" des connecteurs 13' et 13" en saillie vers l'intérieur de l'embout 3' sont solidaires de deux côtés opposés de la section carrée de l'élément d'engagement 10'. Les moyens de fixation 14' et 14" sont réalisés d'une manière sensiblement analogue aux moyens de fixation 14 selon le premier mode de réalisation. En particulier, les éléments 14' et 14" comportent chacun une plaquette telle que 15' sur les bords de laquelle viennent s'engager des glissières solidaires d'une surface d'appui du connecteur correspondant 13'.

Comme dans le cas du premier mode de réalisation, la partie tubulaire en matériau élastomère de l'embout 3' comporte des fentes dans lesquelles sont engagées les bases de support des moyens de fixation amovibles 14' et 14".

Pour réaliser le montage de l'élément d'engagement 10' sur la partie tubulaire en élastomère à section carrée de l'embout 3', on engage la section tubulaire carrée de l'élément 10' sur la partie d'extrémité tubulaire en élastomère à section carrée de l'embout 3', comme représenté sur la figure 6. Les parties de base des moyens de fixation 14' et 14" des connecteurs 13' et 13" sont engagées dans les fentes du tronçon tubulaire en élastomère.

Lorsque l'élément 10' est totalement engagé sur le tronçon tubulaire en élastomère, comme représenté sur la figure 5, l'élément 10' vient en appui par ses extrémités sur des parties de butée du tronçon tubulaire en élastomère. Les doigts 12' de l'élément 10' viennent s'engager dans une rainure 9' du tronçon tubulaire en élastomère délimité par un joint à lèvre 9'a à section carrée.

Le montage et le démontage des connecteurs 13' et 13" peuvent être réalisés comme décrit précédemment en ce qui concerne le connecteur 13 engagé dans l'embout 3 de la gaine suivant le premier mode de réalisation.

L'engagement et la fixation de l'embout 3' dans l'ouverture 7'a d'une tôle 7' peuvent être réalisés comme décrit précédemment par poussée sur l'embout 3' qui est introduit dans l'ouverture 7'a à section carrée. Du fait que les connecteurs 13' et 13" sont parfaitement maintenus à l'intérieur de l'embout 3', on peut réaliser leur connexion et la fixation ultérieure de l'embout 3' dans l'ouverture de la tôle 7' sans risque de déplacement des connecteurs 13' et 13". Comme dans le cas du premier mode de réalisation, l'engagement et la fixation de l'embout 3' dans l'ouverture de la tôle 7' sont facilités par la forme et la matière constitutive de l'élément d'engagement 10'.

L'invention ne se limite pas aux modes de réalisation qui ont été décrits.

C'est ainsi qu'on peut imaginer des gaines suivant l'invention ayant un embout terminal permettant de recevoir et d'assurer la fixation d'un nombre quelconque de connecteurs.

La partie d'extrémité en matière élastomère de l'embout et l'élément d'engagement monté sur ce tronçon d'extrémité peuvent avoir une section de forme quelconque.

Le tronçon d'extrémité de l'embout et l'élément d'engagement peuvent être assemblés d'une manière quelconque et différente d'un engagement en force et d'une mise en appui sur des butées prévues sur le tronçon d'extrémité du matériau élastomère de l'embout

L'élément d'engagement peut être réalisé sous la forme d'un insert qui est partiellement noyé dans le matériau élastomère de l'embout au moment de la réalisation de la gaine de protection par moulage.

L'élément d'engagement qui est généralement en matière plastique ou en métal peut être réalisé en une seule ou en plusieurs parties. Dans le cas où l'élément d'engagement est réalisé en plusieurs parties et par exemple en deux parties, ces parties peuvent être engagées séparément autour de l'embout et assemblées entre elles par clippage ou par l'intermédiaire d'éléments mécaniques. Chacune des parties de l'élément d'engagement peut comporter un moyen de fixation amovible d'un connecteur ou encore, une seule partie de l'élément d'engagement peut comporter un moyen de fixation d'un connecteur.

L'élément d'engagement peut présenter un nombre de doigts souples différent de quatre. Toutefois, l'élément d'engagement doit comporter au moins trois doigts souples.

La gaine et l'embout comportant l'élément d'engagement peuvent être obtenus par un procédé de bi-injection, simultanée ou non, de deux matières plastiques de duretés différentes.

La gaine de protection suivant l'invention s'applique non seulement dans le cas des véhicules automobiles mais également dans le cas de tout type de véhicules ou encore dans le cas d'installations fixes nécessitant le passage de câbles électriques entre différents points de l'installation, avec connexion d'éléments de raccordement des câbles électriques à d'autres éléments de raccordement de câbles portés par l'installation.

## Revendications

1. Gaine de protection souple en un matériau élastomère pour assurer le passage entre deux parties d'une installation, d'un faisceau électrique comportant un élément de raccordement (13, 13', 13") à l'une au moins de ses extrémités, la gaine (1, 1') ayant au moins un embout (3, 3') de fixation de la gaine (1, 1') dans une ouverture (7a, 7'a) d'une partie (7, 7') de l'installation, à l'une au moins de ses extrémités, dans lequel est engagé l'élément de raccordement (13, 13', 13") du faisceau électrique, **caractérisée par le fait qu'**elle comporte au moins un élément d'engagement (10, 10') favorisant le glissement et assurant la fixation de l'embout (3, 3') dans l'ouverture (7a, 7'a) fixé à la périphérie externe de l'embout (3, 3') et comprenant, dans une disposition en saillie radiale vers l'intérieur, au moins un moyen de fixation amovible (14, 14', 14") de l'élément de raccordement (13, 13', 13") du faisceau électrique.

2. Gaine de protection suivant la revendication 1, **caractérisée par le fait que** le moyen de fixation (14) de l'élément de raccordement (13) du faisceau électrique comporte des moyens d'engagement (15) et de fixation par clippage (16) de l'élément de raccordement (13) sur l'élément d'engagement (10) de l'embout (3).

3. Gaine de protection suivant la revendication 2, **caractérisée par le fait que** le moyen de fixation (14) de l'élément de raccordement (13) comporte une plaquette (15) ayant des bords latéraux (15a, 15b) destinés à coopérer avec des glissières d'une surface d'appui (13a) de l'élément de raccordement (13) et une ouverture (16) d'engagement d'un ergot de clippage de la surface d'appui (13a) de l'élément de raccordement (13).

4. Gaine de protection suivant l'une quelconque des revendications 1 à 3, **caractérisée par le fait que** l'élément de raccordement (10) est constitué par une seule pièce ayant un corps (10a) de forme tubulaire dans laquelle le moyen de fixation (14) est venu de matière avec le corps tubulaire (10a) de l'élément d'engagement.

5. Gaine de protection suivant la revendication 4, **caractérisée par le fait que** le corps tubulaire (10a) de l'élément d'engagement (10) présente une surface extérieure tronconique.

6. Gaine de protection suivant la revendication 4, **caractérisée par le fait que** l'élément d'engagement (10') présente une section carrée, deux moyens de fixation (14', 14") de deux éléments de raccordement (13', 13") étant venus de matière avec des côtés opposés de la section carrée de l'élément d'engagement de forme tubulaire.

7. Gaine de protection suivant l'une quelconque des revendications 4, 5 et 6, **caractérisée par le fait que** l'élément d'engagement (10, 10') comporte au moins trois doigts souples (12, 12') ayant une surface externe (12a) inclinée et en saillie par rapport à la surface externe de l'élément d'engagement tubulaire (10, 10') et comportant une partie d'extrémité (12b) destinée à venir se loger dans une gorge (9, 9') d'une partie tubulaire en matériau élastomère de l'embout (3) délimitée par une lèvre d'étanchéité (9a, 9'a), pour recevoir un bord de l'ouverture (7a, 7'a) de la partie d'installation (7, 7').

8. Gaine de protection suivant l'une quelconque des revendications 1 à 7, **caractérisée par le fait qu'**elle comporte un corps central (1a) ayant une paroi ondulée, un premier embout à une première extrémité du corps central (1a) pour la fixation d'une première extrémité de la gaine dans une ouverture (5a) d'une tôle (5) d'une porte d'un véhicule automobile et un second embout (3) à une seconde extrémité de la partie centrale (1a) de la gaine pour la fixation d'une seconde extrémité de la gaine (1) dans une ouverture (7a) d'une tôle (7) de la caisse du véhicule automobile, à l'intérieur de l'habitacle du véhicule.

9. Gaine de protection suivant l'une quelconque des revendications 1 à 8, **caractérisée par le fait que** l'élément d'engagement (10, 10') est en une matière plastique telle qu'une polyamide.

10. Gaine de protection suivant l'une quelconque des revendications 1 à 9, **caractérisée par le fait que** l'élément d'engagement (10, 10') comporte un corps (10a) de forme tubulaire fixé par engagement et mise en appui sur des butées sur une partie tubulaire en élastomère de l'embout (3).

## Claims

1. Flexible protective sheath of elastomeric material to ensure the passage between two parts of an electric wiring bundle installation comprising a connection element (13, 13', 13") on at least one of its ends, the sheath (1, 1') having at least one terminal portion (3, 3') for fixing the sheath (1, 1') in an opening (7a, 7'a) of a part (7, 7') of the installation, on at least one of its ends, in which the connection element (13, 13', 13") of the electric wiring bundle is engaged, **characterised in that** it comprises at least one engagement element (10, 10') allowing the terminal portion (3, 3') to slide and ensuring its fixing in the opening (7a, 7'a) fixed on the external periphery of the terminal portion (3, 3') and comprising, in a radial, inwardly projecting arrangement, at least one detachable fixing means (14, 14', 14") of the connection element (13, 13', 13") of the electric wiring bundle.

2. Protective sheath according to claim 1, **characterised in that** the fixing means (14) of the connection element (13) of the electric wiring bundle comprise means for engaging (15) and clipping (16) the connection element (13) on the engagement element (10) of the terminal portion (3).

3. Protective sheath according to claim 2, **characterised in that** the fixing means (14) of the connection element (13) comprise a small plate (15) having lateral edges (15a, 15b) intended to co-operate with the slides of a bearing surface (13a) of the connection element (13) and an opening (16) for engaging a clip lug of the bearing surface (13a) of the connection element (13).

4. Protective sheath according to any of claims 1 to 3, **characterised in that** the connection element (10) is made of a single part having a body (10a) of tubular shape in which the fixing means (14) are of the same material as the tubular body (10a) of the engagement element.

5. Protective sheath according to claim 4, **characterised in that** the tubular body (10a) of the engagement element (10) has a frustoconical surface.

6. Protective sheath according to claim 4, **characterised in that** the engagement element (10') has a square section, two fixing means (14', 14") of two connection elements (13', 13") being made of the same material as the opposite sides of the square section of the tubular shaped engagement element.

7. Protective sheath according to any of claims 4, 5 and 6, **characterised in that** the engagement element (10, 10') comprises least three flexible fingers (12, 12') having an inclined external surface (12a) projecting relative to the external surface of the tubular engagement element (10, 10') and comprising an end part (12b) intended to be housed in a groove (9, 9') of a tubular part, of elastomeric material, of the terminal portion (3) defined by a sealing lip (9a, 9'a), to receive an edge of the opening (7a, 7'a) of the installation part (7, 7').

8. Protective sheath according to any of claims 1 to 7, **characterised in that** it comprises a central body (1a) having an undulating wall, a first terminal portion on a first end of the central body (1a) for fixing a first end of the sheath in an opening (5a) of a metal sheet (5) of a vehicle door, and a second terminal portion (3) on a second end of the central part (1a) of the sheath for fixing a second end of the sheath (1) in an opening (7a) of a metal sheet (7) of a vehicle body, inside the vehicle cab.

9. Protective sheath according to any of claims 1 to 8, **characterised in that** the engagement element (10, 10') is of a plastics material, such as a polyamide.

10. Protective sheath according to any of claims 1 to 9, **characterised in that** the engagement element (10, 10') comprises a body (10a) of tubular shape fixed by engagement and abutting on stops of an elastomeric, tubular part of the terminal portion (3).

## Patentansprüche

1. Biegsame Schutzhülle aus einem Elastomer für die Durchführung eines elektrischen Leitungsbündels, das an mindestens einem seiner Enden ein Anschlußelement (13, 13', 13") aufweist, zwischen zwei Teilen einer Anlage, wobei die Hülle (1, 1') mindestens einen Ansatz (3, 3') aufweist, der zur Befestigung der Hülle (1, 1') in einer Öffnung (7a, 7'a) eines Teils (7, 7') der Anlage an mindestens einem ihrer Enden dient und in den das Anschlußelement (13, 13', 13") des elektrischen Leitungsbündels eingesteckt ist, **dadurch gekennzeichnet, daß** sie mindestens ein das Gleiten des Ansatzes (3, 3') begünstigendes und seine Befestigung in der Öffnung (7a, 7'a) gewährleistendes Einführungselement (10, 10') aufweist, das am Außenumfang des Ansatzes (3, 3') befestigt ist und in einer radial nach innen vorstehenden Anordnung mindestens ein Mittel (14, 14', 14") zur lösbaren Befestigung des Anschlußelements (13, 13', 13") des Leitungsbündels aufweist.

2. Schutzhülle nach Anspruch 1, **dadurch gekennzeichnet, daß** das Mittel (14) zur Befestigung des Anschlußelements (13) des elektrischen Leitungsbündels Mittel zur Einführung (15) und zur Befestigung (16) durch Einklinkung des Anschlußelements (13) an dem Element (10) zur Einführung des Ansatzes (13) aufweist.

3. Schutzhülle nach Anspruch 2, **dadurch gekennzeichnet, daß** das Mittel (14) zur Befestigung des Anschlußelements (13) eine Platte (15) mit Seitenrändern (15a, 15b), die dazu bestimmt sind, mit Gleitführungen einer Auflagefläche (13a) des Anschlußelements (13) zusammenzuwirken, und eine Öffnung (16) zur Einführung einer Einklinknase der Auflagefläche (13a) des Anschlußelements (13) aufweist.

4. Schutzhülle nach einem der Ansprüche 1 bis 3, **dadurch gekennzeichnet, daß** das Anschlußelement (10) aus einem einzigen Teil besteht, das einen rohrförmigen Körper (10a) besitzt, in dem das Befestigungsmittel (14) mit dem rohrförmigen Körper (10a) des Einführungselements einstückig ausgeführt ist.

5. Schutzhülle nach Anspruch 4, **dadurch gekennzeichnet, daß** der rohrförmige Körper (10a) des Einführungselements (10) eine kegelstumpfförmige Außenfläche aufweist.

6. Schutzhülle nach Anspruch 4, **dadurch gekennzeichnet, daß** das Einführungselement (10') einen quadratischen Querschnitt aufweist, wobei zwei Mittel (14', 14") zur Befestigung von zwei Anschlußelementen (13', 13") mit entgegengesetzten Seiten des quadratischen Querschnitts des rohrförmigen Einführungselements einstückig ausgeführt sind.

7. Schutzhülle nach einem der Ansprüche 4, 5 und 6, **dadurch gekennzeichnet, daß** das Einführungselement (10, 10') mindestens drei biegsame Finger (12, 12') aufweist, die eine schräge und bezüglich der Außenfläche des rohrförmigen Einführungselements (10, 10') vorstehende Außenfläche und einen Endteil (12b) aufweisen, der dazu bestimmt ist, in eine Nut (9, 9') eines aus Elastomer bestehenden rohrförmigen Teils des Ansatzes (3) einzutreten, die durch eine Dichtungslippe (9a, 9'a) abgegrenzt ist, um einen Rand der Öffnung (7a, 7'a) des Anlagenteils (7, 7') aufzunehmen.

8. Schutzhülle nach einem der Ansprüche 1 bis 7, **dadurch gekennzeichnet, daß** sie einen zentralen Körper (1a) mit einer gewellten Wand, einen ersten Ansatz an einem ersten Ende des zentralen Körpers (1a) für die Befestigung eines ersten Endes der Hülle in einer Öffnung (5a) eines Blechs (5) einer Tür eines Kraftfahrzeugs und einen zweiten Ansatz (3) an einem zweiten Ende des zentralen Teils (1a) der Hülle für die Befestigung eines zweiten Endes der Hülle (1) in einer Öffnung (7a) eines Blechs (7) der Karosserie des Kraftfahrzeugs im Inneren des Insassenraums des Fahrzeugs aufweist.

9. Schutzhülle nach einem der Ansprüche 1 bis 8, **dadurch gekennzeichnet, daß** das Einführungselement (10, 10') aus einem Kunststoff wie Polyamid besteht.

10. Schutzhülle nach einem der Ansprüche 1 bis 9, **dadurch gekennzeichnet, daß** das Einführungselement (10, 10') einen rohrförmigen Körper (10a) aufweist, der durch Einführung und Inanlagebringen an Anschlägen an einem rohrförmigen Teil aus Elastomer des Aufsatzes (3) befestigt ist.
